# EUROPEAN PATENT APPLICATION

(11) **EP 3 981 813 A1**
(43) Date of publication of application: **13.04.2022**
(21) Application number: 20201394.2
(22) Date of filing: 12.10.2020
(51) Int. Cl.: C08G 18/10, C08G 18/32, C08K 5/5399, C08L 75/04

(54) **POLYURETHANE LAYERS AND USE OF REACTIVE FLAME RETARDANTS**

(71) Applicant: Benecke-Kaliko AG, 30419 Hannover (DE)
(72) Inventor: Neumann, Thorsten, 30419 Hannover (DE); Wagner, Klaus, 30419 Hannover (DE); Schlottke, Holger, 30419 Hannover (DE)
(74) Representative: Continental Corporation

(57) **Abstract**

A method for producing a polyurethane film including preparing a paste-like compound comprising a polyurethane forming mixture, wherein the polyurethane forming mixture comprises a prepolymer having isocyanate function groups and at least one flame retardant, applying the paste-like compound to a base, drying and crosslinking the paste-like compound applied to the base through addition of heat to form a film, allowing the film to cool, characterized in that the at least one flame retardant is a polyamine methylphosphonate complex, and wherein the isocyanate function groups are at least 80% crosslinked after allowing the film to cool.

## Description

The invention concerns polyurethane layers formed by reaction of blocked isocyanates or unblocked isocyanates with alcohols and/or amines, for example, polyurethane dispersions, high-solids polyurethane systems, or thermoplastic polyurethanes (TPU) in the form of single or multi-layer systems as films or artificial leather, etc.

The manufacture of such polyurethane coatings includes isocyanates, blocked or unblocked, which are used to react with other reactactants with functional groups, such as alcohols, amines or similar. In some cases, oxime, such as butanonoxim, acetonoxim and pentanonoxim, are commonly used as blocking agents.

The state of the art describes the multi-layer flame-retardant systems using addition of flame retardants to the respective films or textiles, as a seperate component which does not react with the polyurethane systems, and which serve as a filling material in "passive" film character, or as a plasticizer, or a halogen supplied in liquid form. As a general rule, these flame retardants are based on metal oxides and hydroxides, such as aluminum hydroxide, magnesium hydroxide or antimony trioxide, zinc compounds such as zinc borates, nitrogen compounds such as cyanorates, ammonium salts and melamine, phosphorus compounds such as phosphates, phosphites and their complexes, or intumescent flame retardants, such as expandable graphite.

This "passive" approach allows the flame retardant systems to remain in the polymer matrix, but may also lead to migration problems on the film or layer surface, which can be identified, for example, by the formation of undesirable flame retardant surface layer. These changes include the change of gloss level, formation of patches with haptical and optical surface deformation such as blocking agents and powder expression. This can occur for both fixed and liquid systems. This may also result in a deterioration of the flame-retardancy characteristics, and a loss or partial failure to comply with flame retardancy performance requirements.

For example, if polyurethanes are used, which are formed by a crosslinked polymeric reaction, such as the case for high solid systems which include a high solids pre-polymer crosslinked with free or blocked isocyanates, and a corresponding reaction catalyst (for example, diamines allowing a chain extension), the above flame retardant systems may disrupt the crosslinking reaction. For example, alkaline metal hydroxides can react by a nucleophile disruption of the isocyanates groups, with possible carbon separation. In this respect, a proper prepolymer / isocyanate ratio must be chosen, which prevents or responds more rapidly to these reactions due to the increased diamine reactivity.

However, ammonium salts, for example, with phosphates or phosphites, usually do not react in this respect, as they are present in an ionic form, which, in turn, if they do not melt, they do not react with the isocyanate groups.

The task of the invention is to propose polyurethane coatings of the kind mentioned above, which effectively binds the flame retardant in the polyurethane layer in order to prevent migration out of the film layer, and maintain good flame retardancy performance requirements of the film.

The task posed is solved by preparing a polyurethane layer according to the characteristics of patent claim 1. Preferred designs and further aspects of the invention are the subject of the dependent claims.

The invention provides that the polyurethane layer contains another formulation component, a (poly)-amine methylphosphonate complex, which is absorbed in the polyurethane coating and specifically binds with the polymer matrix molecules.

For example, a diamine methylphosphonate complex, such as, but not limited to, the reaction product of methylphosphonic acid and 1,3,5-triazine-2,4,6-triamine, methylphosphonic acid with (aminoiminomethyl)urea (1:1), or methylphosphonate 1,2 ethanediamine complex (MPPSA), and the like, combined with a high solids prepolymer (with either blocked or free isocyanate groups) can react under certain elevated temperature conditions. It is believed that the methylphosphonic acid, which has a melting point at about 100°C to 110°C, softens and releases the amine in response to the isocyanate or weakens the ionical bond between the phosphate and the amine and allows an access to the reaction groups of the isocyante. However, the reaction of only the diamine with the isocyanate groups of the prepolymer does not occur, because the relative concentration of reactants avoids equimolar reaction between the diamine and the isocyanate groups. As such, there is a chemical reaction between only one of the two amino-functionalities of the diamine and the additional ionic interaction between the methylphosphonic acid (simply protonated) and the second amine group of the diamine.

An advantage provided is coexistence of the MPPSA and the prepolymer containing isocyanates at ambient room temperature, with long pot times. Differential scanning calorimetry (DSC) measurements show that the reaction of the one amine of the diamine with the isocyanate groups of the prepolymer begins after the mixture reaches a temperature above 130 °C, and thereafter, crosslinking occurs which leads to film formation.

The molar ratio of amine functional groups to isocyanate function groups should be from about 1:100 to about 10:1, or preferably from about 5:95 to about 2.5:1, or more preferably from about 1:10 to about 1.5:1.

In addition to the use in the high-strength polyurethanes described above, the inventive system can also be used in the area of solvent based polyurethane systems, where the systems use previously crosslinked isocyanates. These in turn do not react until a reaction temperature is reached, which is always above 100 °C, and actual temperature may depend on the solvent used. By adding the polyamine methylphosphonate complex, such as MPPSA, it is possible to significantly reduce the time from initial film formation to complete crosslinking, by higher crosslinking reaction rates. While typically a minimum retention time of approximately 1 week is required for normal polyurethane systems, for embodiments according to the invention, up to 80% crosslinking can be obtained immediately, or shortly, after the film formation. Surprisingly, it was found that in this system it is sufficient to use a catalyst quantity of less than 1% by weight of phr binders, which includes polyisocyanates partially crosslinked at a level of at least 0.1 - 20%, to achieve a significant crosslinking acceleration. This provides sufficient crosslinking so the mechanical characteristics of the film do not change after the machine passes in film formation, and the corresponding cooling down, which is a prerequisite for near complete crosslinking.

The influence polyamine methylphosphonate complex, such as MPPSA, on aqueous dispersions, as well as the corresponding crosslinking behavior of isocyanates, is that small quantities allow a significant acceleration of the crosslinking reaction. This was done on the one hand by applying a complete pattern based on an aqueous PUD cover film in combination with a mechanically foamed interlayer based on aqueous polyurethane dispersions. For example, the complete samples showed that the grain stability describing the loss of grain by weight treatment and indicating the percentage of recovery after load was already achieved after the machine pass (50 +/- 15 g/m² for a top coat at 70-150 °C (20-120 s), and 50-300 g/m² for an intermediate coat at 70-180°C (20-240 s) at a machine speed of 2-30 m/min), which could normally only be obtained after a period of 1-2 weeks after the machine pass. This is needed due to the slow reaction time due to migration of polymeric isocyanates which need to find a reaction partner. This is well known in the film application technology field.

In addition to the significantly higher reaction speed and a lower follow-up time, films in any of high solids, solvent and aqueous applications, significantly improved long-term high-temperature resistance compared to the standard is realized. This may be an improvement within the range of from about 10% to about 2000% of delta E values for the high solids system, for example.

In addition to the polyamine methylphosphonate complexes described above, compounds of methylphosphonic acid with amido-urea or melamine may also provide such accelerating and cross-linking effect. It is assumed that in general a polyamine- methylphosphonate, with at least two amino function groups, may be effective. Furthermore, use of these methylphosphonate compounds provides for the application to a bonded substrate. For example, a textile carrier which, in the untreated state, has only low levels of reactivity capacity, such as for some polyester, polyolefin, silicone or Teflon coated substrates. Therefore, the textile or substrate is coated with the amino-methylphosphonate. This either could be accomplished by spray coating, dip coating or by penetration through a bath of these chemicals. The water based mixture could reach from 1 g/l up to 800 g/l (dependent on the processing temperature which might evaluated to allow the salt to be dissolved.). Excessive materials can be squeezed out. After the drying process the amino-methylphosphonic acid compound is attached on the surface of the textile or substrate as small crystals, which are not covalently bound.

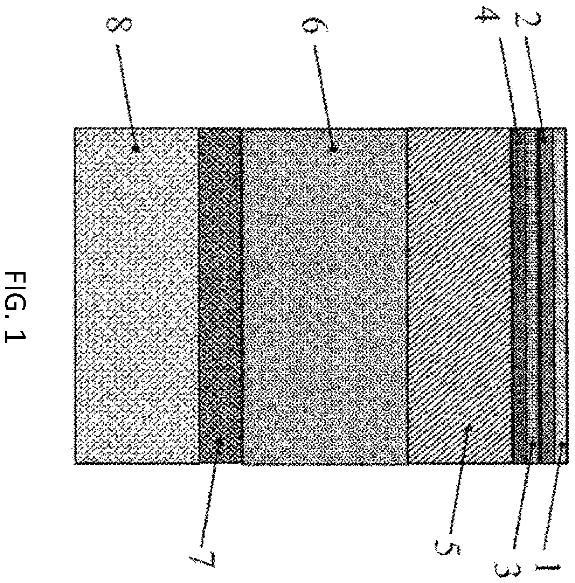

Now referencing FIG. 1 which shows a structure of a multi-layered composite serving as an imitation leather, for example of the kind that can be used as a covering material for seats, such as in automotive interiors, but not limited thereto. It should be understood that embodiments according to the invention could be a single layer, or multi-layer structure having any two or more layers selected from layers represented by reference numerals 1 through 8. Also, the above described layer forming mixtures of polyurethane with a polyamine methylphosphonate complex, may be used in any one or more layers selected from reference numerals 1 through 7 in FIG. 1.

Starting from a top surface that constitutes or forms the visible side, the individual layers are successively labeled with the reference numerals 1 through 8.

The top layer 1 is composed of, includes or comprises a lacquer layer that determines the feel and sheen and is, for example, based on polyurethane or acrylate, based on PVC or PVDF, or based on aniline-, epoxy- or polyamide polyester, while the layer 2 under this is likewise composed of, includes or comprises a lacquer layer that is, for example, based on acrylate or one of the above-mentioned alternatives and which gives the composite wear resistance.

The layer 3 under this once again a lacquer layer that gives the composite the desired coloring and is therefore usually embodied in the form of a printed layer through the use of suitable pigments.

The next layer 4 is an adhesive layer that can be constructed, for example, on the basis of a lacquer layer containing polyurethane or acrylate. This produces the adhesion of the overlying layers 1 through 3 to the underlying layer 5.

The layer 5 consists of either a water based polyurethane layer, a high solid based layer or a solvent based layer. There is even the possibility of using a hybrid construction of silicon-polyurethane layer, where the silicone material is a liquid silicone rubber consistent of a silane and a platin based crosslinker, which is added to the polyurethane compound in this case a high solid based polymer. In addition, hybrid construction of high solid based polyurethanes or water based polyurethanes mixed with PVC-plastisols are possible. The mass weight per unit area is in the range of of 5 to 500 g/m², preferably for the water based coatings in the range of 5-200 g/m², in the high solid based coatings in the range of 20- 500 g/m² as well as for the hybrid constructions.

Underneath this is an intermediate layer 6 likewise based on a film construction as mentioned in the layer 5. This intermediate layer can be embodied in the form of a foam, expanding polymer spheres such as Expancell, or can be foamed through the addition of blowing agents, while the layer 5 on top of it and also the adhesive layer 7 underneath it, which will be explained in greater detail below, are embodied in a compact form. The mass per unit area of the foamed intermediate layer 6 lies in a range of approximately 10 to 1000 g/m².

Beneath the foamed intermediate layer 6, there is an adhesive layer 7 with a mass per unit area of 50 to 400 g/m2 that can likewise be composed of, include or comprise a breathable film, produced using the method according to this invention. This layer 7 produces the adhesion to the bottom support layer that is labeled with the reference numeral 8, which can in a known fashion be composed of, include or comprise a textile, a polymer, or a foamed support material. This can be a woven support material, a nonwoven, a screen based on organic or inorganic materials such as mineral wool, glass and carbon fibers, and so forth, possibly also with the addition of electrically conductive fibers in order to counteract an electrostatic charging.

The imitation leather according to FIG. 1 is produced, for example, using the so-called reversal process in which first, the intermediate layer 5 is cured on a substrate, such as an embossed or non-embossed paper web, plastic web, or metal web, heated, and coated with a sequence of an intermediate layer 6, and 7, and the support material 8 and heated, then removed from the substrate, and subsequently coated with the layers 1-4, for example, by rasterizing, doctoring, or spraying.

Through the use of suitable methods such as steel embossing, vacuum embossing, silicone sheet roller embossing, and the like, the imitation leather can also have an applied surface embossing in the form of a leather grain structure in the region of or near its visible side.

### List of reference signs

- 1: Top layer
- 2: Lacquer layer
- 3: Overlying layer
- 4: Adhesive layer
- 5: Underlying layer
- 6: Intermediate layer
- 7: Adhesive layer
- 8: Support material

## Claims

1. A method for producing a polyurethane film comprising the steps of:
- preparing a paste-like compound comprising a polyurethane forming mixture, wherein the polyurethane forming mixture comprises a prepolymer having isocyanate function groups and at least one reactive flame retardant;
- drying and crosslinking the paste-like compound through addition of heat to form a film; and,
- allowing the film to cool;
**characterized in that** the at least one reactive flame retardant is a polyamine methylphosphonate complex, and wherein the isocyanate function groups are at least 80% crosslinked after allowing the film to cool.

2. The method according to claim 1, wherein the polyamine methylphosphonate complex is a diamine methylphosphonate complex.

3. The method according to any of the preceding claims, wherein a molar ratio of amine function groups of the polyamine methylphosphonate complex to isocyanate functional groups of the prepolymer is equal to or less than 2:1.

4. The method according to any of the preceding claims, wherein the wherein the polyurethane forming mixture is a high solids mixture.

5. The method according to any of claims 1 through 3, wherein the wherein the polyurethane forming mixture is solvent based mixture.

6. The method according to any of claims 1 through 3, wherein the wherein the polyurethane forming mixture is comprised in an aqueous dispersion.

7. The method according to any of the preceding claims, further comprising applying the paste-like compound to a base before the addition of heat to form the film.

8. The method according to any of the preceding claims, wherein the isocyanate functional groups are blocked isocyanate functional groups.

9. The method according to any of claims 1 through 7, wherein the isocyanate functional groups are unblocked isocyanate functional groups.

10. The method according to any of the preceding claims, wherein the polyamine methylphosphonate complex is methylphosphonate 1,2 ethanediamine complex.
